# EUROPÄISCHE PATENTSCHRIFT

(11) **EP 0 762 528 B1**
(45) Veröffentlichungstag und Bekanntmachung des Hinweises auf die Patenterteilung: **01.09.2004**
(21) Anmeldenummer: 96108809.3
(22) Anmeldetag: 01.06.1996
(51) Int. Cl.: H01M 10/50, H01M 10/04, H01M 10/28

(54) **Hochenergiebatterie mit mehreren Einzelzellen**
Several cells containing high energy density battery
Batterie à haute densité d'énergie contenant plusieurs éléments

(30) Priorität: 14.08.1995 DE 19529880
(43) Veröffentlichungstag der Anmeldung: 12.03.1997
(73) Patentinhaber: Bayerische Motoren Werke Aktiengesellschaft, 80788 München (DE)
(72) Erfinder: Catchpole, Peter, 85049 Ingolstadt (DE); Höppeler, Robert, Dr., 85123 Karlskron (DE); Kranz, Herbert, Dr., 86919 Utting (DE)

(56) Entgegenhaltungen:
- EP-A- 0 305 880
- EP-A- 0 476 484
- WO-A-94/02969
- US-A- 5 298 347

## Beschreibung

Die Erfindung bezieht sich auf eine Hochenergiebatterie mit mehren Einzelzellen.

Es ist eine derartige Hochenergiebatterie bekannt, bei der die Einzelzellen zylinderförmig und aufrecht stehend angeordnet sind. Diese Anordnung ist wärmetechnisch problematisch, da es innerhalb der Einzelzellen zu unterschiedlichen Temperaturgefällen kommen kann und eine Möglichkeit, das thermische Verhalten der Hochenergiebatterie von außen zu beeinflussen, weitgehend ausgeschlossen ist.

Der Erfindung liegt die Aufgabe zugrunde, eine Hochenergiebatterie der eingangs genannten Art zu schaffen, die sich durch einen konstruktiv einfachen und wärmetechnisch unproblematischen Aufbau auszeichnet

Die Erfindung löst diese Aufgabe durch die kennzeichnenden Merkmale des Patentanspruchs 1.

Durch die Anordnung von Wärmetauschern an einem Großteil der gesamten Oberfläche der Einzelzellen wird es möglich, die thermischen Eigenschaften der Einzelzellen deutlich zu beeinflussen und das Temperaturniveau über die gesamte Hochenergiebatterie hinweg zu vereinheitlichen. Bedingt durch die geringe Bauhöhe ist es auch möglich, als Unterbringungsort bei einer Anwendung in einem Kraftfahrzeug den Bereich des Wagenbodens zu verwenden. Dadurch wird der ansonsten von der Hochenergiebatterie beanspruchte Platz im Bereich des Gepäckraums frei.

In den weiteren Patentansprüchen sind vorteilhafte Ausgestaltungen der Erfindung dargestellt. Diese zeichnen sich aus für den Patentanspruch
- 2: durch eine weitere Verbesserung der Kompaktheit des Aufbaus,
- 3: durch eine optimale Temperierung des Aufbaus,
- 4: durch eine weitere Erhöhung der Einzelzellenzahl ohne Vergrößerung der Bauhöhe,
- 5: durch Verdoppelung der Einzelzellen unter Beibehaltung einer flachen Bauweise
- 6: durch die Möglichkeit, jede Einzelzelle von außen zu betrachten und
- 7: durch die Möglichkeit, bei einem Fehler in einer Einzelzelle mit der Folge einer Druckerhöhung eine Kettenreaktion zu verhindern.

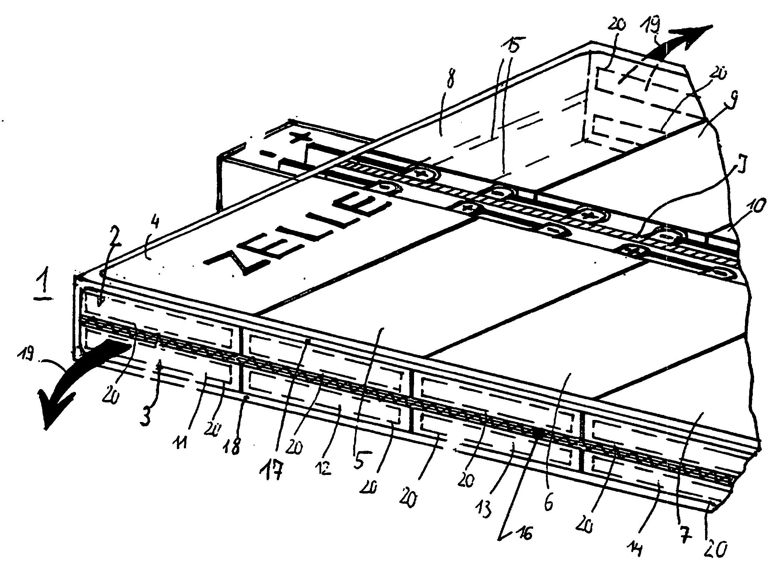

Die Erfindung ist anhand eines in der Zeichnung dargestellten Ausführungsbeispiels weiter erläutert. Es zeigt die einzige Figur eine Hochenergiebatterie gemäß der Erfindung.

Die Hochenergiebatterie 1 besteht aus zwei Lagen 2 und 3 von Einzelzellen 4 bis 15. Jede der beiden Lagen besteht aus zwei Reihen von Einzelzellen, die mit ihrer Längsseite aneinandergereiht und wie dargestellt (+/-) beschaltet sind. Jeweils zwei Reihen stehen sich gegenüber und bilden eine Lage. Zwischen den beiden Lagen befindet sich ein Wärmetauschermedium 16. Auf der Oberseite der oberen Lage 4 und der unteren Seite der unteren Lage 3 befindet sich ebenfalls ein Wärmetauschermedium 17 und 18. Dieses flüssige Medium, z.B. Öl, umgibt damit bis auf die Längs- und Stirnseiten jede dieser Einzelzellen vollständig. Damit wird es möglich, die Hochenergiebatterie bedarfsweise zu heizen oder zu kühlen. Hierzu wird das Kühlmedium auf den Deckschichten 17 und 18 einerseits und in der Zwischenlage 16 andererseits im Gegenstromprinzip betrieben. Ist der Strom durch die Wärmetauscher in den Kreislauf der ohnehin notwendigen Fahrzeugklimatisierung einbezogen, läßt sich der Aufwand zur Temperierung der Batterie 1 und des Fahrzeuginnenraums minimieren.

Aus Gründen der Sicherheit ist keine der Einzelzellen von anderen Einzelzellen vollständig umschlossen. Jede Einzelzelle hat mindestens eine nach außen gerichtete Stirnseite. In diesen Stirnseiten befinden sich Fenster, die mit strichliert eingezeichneten Sollbruchstellen versehen sind. Im Störfall austretender Elektrolyt kann nach Aufspringen des Fensters durch den sich in der betreffenden Einzelzellen aufbauenden Druck aus dem Gefahrenbereich für sekundäre Kurzschlüsse abfließen. Dies ist anhand eines Pfeils 19 angedeutet.

Die dargestellte Flachbauweise der Hochenergiebatterie 1 zeichnet sich durch eine homogene und damit verbesserte Temperaturteilung über die gesamte Batterie hinweg aus. Die Wärmediffusionswege bei Temperaturänderungen sind gering. Damit ergeben sich kürzere Reaktionszeiten. Die Flachbauweise ermöglicht zusätzlich bei einem Kraftfahrzeug die Unterbringung im Unterbodenbereich außerhalb der Crashzonen und des Stauraums. Dadurch ist die Sicherheit im Störfall erhöht. Im Falle einer inneren Störung wird durch die Sollbruchstelle im Fenster eine lokale Sichheitsmaßnahme gewährleistet.

## Patentansprüche

1. Hochenergiebatterie mit mehren Einzelzellen, die die Form von flachen Quadem besitzen, **dadurch gekennzeichnet, dass** die Einzelzellen (4-15) so angeordnet sind, dass ihre Grundflächen einerseits und ihre Deckflächen andererseits in einer Ebene liegen und die Oberseite und die Unterseite eines flachen Batteriekörpers bilden, und dass der Batteriekörper auf seiner Oberseite und seiner Unterseite (17,18) mit einem flüssigen Wärmetauschermedium umgeben ist.

2. Hochenergiebatterie nach Anspruch 1, **dadurch gekennzeichnet, daß** zwei Batteriekörper (2,3) sandwichartig aufeinander angeordnet sind.

3. Hochenergiebatterie nach Anspruch 2, **dadurch gekennzeichnet, daß** in der Zwischenlage (16) und auf den freien Breitflächen ein Wärmetauschermedium angeordnet ist

4. Hochenergiebatterie nach einem der Ansprüche 1 bis 3, **dadurch gekennzeichnet, daß** die Einzelzellen (4-15) mit ihrer Längsseite aneinandergereiht sind.

5. Hochenergiebatterie nach Anspruch 4, **dadurch gekennzeichnet, daß** zwei Reihen von Einzelzellen (4-7,8-10/11-14,15) sich mit ihrer Stirnseite gegenüberstehen.

6. Hochenergiebatterie nach einem der Ansprüche 1 bis 6, **dadurch gekennzeichnet, daß** die Einzelzellen an ihrer freien Stirnseite ein Fenster (20) besitzen.

7. Hochenergiebatterie nach Anspruch 6, **dadurch gekennzeichnet, daß** die Fenster (20) eine Sollbruchstelle besitzen.

## Claims

1. A high-energy battery with a plurality of individual cells which have a flat foursided shape, **characterised in that** the individual cells (4, 15) are arranged such that their base faces, on the one hand, and their top faces, on the other hand, lie in one plane and form the upper side and the lower side of a flat battery body, and **in that** the battery body is surrounded on its upper side and its lower side (17, 18) with a liquid heat exchanger medium.

2. A high-energy battery according to claim 1, **characterised in that** two battery bodies (2, 3) are arranged on top of one another in the manner of a sandwich.

3. A high-energy battery according to claim 2, **characterised in that** a heat exchanger medium is arranged in the intermediate layer (16) and on the free broad faces.

4. A high-energy battery according to any one of claims 1 to 3, **characterised in that** the individual cells (4, 15) are arranged with their longitudinal side next to each other in a row.

5. A high-energy battery according to claim 4, **characterised in that** two rows of individual cells (4 to 7, 8 to 10/11 to 14, 15) oppose each other with their end face.

6. A high-energy battery according to any one of claims 1 to 6, **characterised in that** the individual cells have a window (20) on their free end face.

7. A high-energy battery according to claim 6, **characterised in that** the windows (20) have a predetermined breaking point.

## Revendications

1. Batterie à haute énergie composée de plusieurs éléments qui ont la forme de parallélépipèdes plats,
**caractérisée en ce que**
les éléments (4 à 15) sont disposés de telle sorte que leurs surfaces de base d'une part et leurs surfaces de recouvrement d'autre part se trouvent dans un plan et forment le côté supérieur et le côté inférieur d'un corps plat de batterie et, sur son côté supérieur et son côté inférieur (17, 18), le corps de batterie est entouré d'un milieu liquide échangeur de chaleur.

2. Batterie à haute énergie selon la revendication 1,
**caractérisée en ce que**
deux corps de batterie (2, 3) sont disposés en sandwich l'un par-dessus l'autre.

3. Batterie à haute énergie selon la revendication 2,
**caractérisée en ce qu'**
un milieu échangeur de chaleur est disposé dans la couche intermédiaire (16) et sur les surfaces larges libres.

4. Batterie à haute énergie selon l'une des revendications 1 à 3,
**caractérisée en ce que**
les éléments (4 à 15) sont alignés par leur grand côté.

5. Batterie à haute énergie selon la revendication 4,
**caractérisée en ce que**
deux rangées d'éléments (4 à 7, 8 à 10/11 à 14, 15) se font face par leur côté frontal.

6. Batterie à haute énergie selon l'une des revendications 1 à 6,
**caractérisée en ce que**
les éléments possèdent une fenêtre (20) sur leur côté frontal libre.

7. Batterie à haute énergie selon la revendication 6,
**caractérisée en ce que**
les fenêtres (20) possèdent un point destiné à la rupture.
